# EUROPÄISCHE PATENTANMELDUNG

(11) **EP 1 148 282 A2**
(43) Veröffentlichungstag der Anmeldung: **24.10.2001**
(21) Anmeldenummer: 01890088.6
(22) Anmeldetag: 21.03.2001
(51) Int. Cl.: F16K 15/08

(54) **Ringventil**

(30) Priorität: 18.04.2000 AT 6862000
(71) Anmelder: Hoerbiger Kompressortechnik Services GmbH, 1040 Wien (AT)
(72) Erfinder: Steinrück, Peter, Dipl.-Ing., Dr., 4830 Hallstadt (AT); Artner, Dietmar, Dipl.-Ing., 7400 Oberwart (AT)
(74) Vertreter: Pinter, Rudolf, Dipl.-Ing.

(57) **Zusammenfassung**

Das Ventil weist einen Ventilsitz (1) mit im wesentlichen ringförmig konzentrisch angeordneten Durchgangskanälen (2) für das gesteuerte Medium, einen Fänger (3), mit Abströmkanälen (4), eine zwischen Fänger (3) und Ventilsitz (1) hin und her beweglich angeordnete Ventilplatte (5) mit mehreren einzelnen den Durchgangskanälen des Ventilsitzes (1) zugeordneten Ringplatten (7) und einer vom Fänger (3) federbelastet auf den Ringplatten (7) aufliegenden Stützplatte (8) auf. Um eine Führung jeder einzelnen Ringplatte (7) in Hubrichtung bei einfacher gemeinsamer Befederung zu ermöglichen besteht die Stützplatte (8) aus einzelnen konzentrisch angeordneten jeweils zwei benachbarte Ringplatten (7) übergreifenden Stützringen (9,9'), welche in Hubrichtung an Führungsansätzen (10) des Fängers (3) geführt sind, die an den Radialstegen (11) des Fängers (3) jeweils im Bereich von Außen- und Innenumfang der Stützringe (9,9') angeordnet sind und soweit in Richtung Ventilsitz (1) vorragen, daß auch die jeweils benachbarte Ringplatte (7) über den gesamten Hub daran geführt ist.

## Beschreibung

Die Erfindung betrifft ein Ventil, insbesonders für Kolbenverdichter, mit einem Ventilsitz, der im wesentlichen ringförmig konzentrisch angeordnete Durchgangskanäle für das gesteuerte Medium aufweist, einem Fänger, der Abströmkanäle aufweist und im Abstand über dem Ventilsitz angeordnet ist und mit einer zwischen Fänger und Ventilsitz hin und her beweglich angeordneten Ventilplatte, mit mehreren einzelnen den Durchgangskanälen des Ventilsitzes zugeordneten und im wesentlichen abgeschrägte Dichtflächen aufweisenden Ringplatten und einer vom Fänger her federbelastet auf den Ringplatten aufliegenden Stützplatte.

Um die Effizienz von Kolbenkompressoren zu erhöhen wurden Ventile, deren Dichtelemente mit abgeschrägten bzw. torisch ausgebildeten Dichtflächen ausgerüstet sind, bekannt. Dadurch erfolgt die Durchströmung der Ventile mit geringer Turbulenzbildung und daher mit geringeren Druckverlusten. Damit sicheres Abdichten erreicht wird, müssen sich die Dichtelemente an die Geometrie der im Ventilsitz ausgebildeten Dichtflächen anschmiegen können, was bei der üblichen Ausführung der Dichtspalte als konzentrische Kegelflächen mittels als unzusammenhängende Ringe ausgebildeter Dichtelemente realisiert wird.

Eine Ausführung mit einzeln befederten Ringplatten, wie sie beispielsweise aus der US-PS 3.536.094 bekannt ist, hat den Nachteil, daß starke Einschränkungen bei der Wahl der Schließfedern hingenommen werden müssen. Entweder werden die Federn in den Knoten des aus einem Netz von radialen und in Umfangsrichtung verlaufenden Stegen gebildeten Ventilfängers gesetzt, wodurch die Anzahl der an einem Ventilring angreifenden Federn stark begrenzt ist und gleichzeitig der Durchmesser der Federn die Breite der Ringe nicht wesentlich übersteigen darf, um ungünstige Verschneidungen zwischen dem am Ventilring angreifenden Federende mit dem Ring zu vermeiden, oder die Federn werden über den gesamten Umfang der in Umfangsrichtung verlaufenden Stege verteilt, wobei der maximale Durchmesser der Federn eng begrenzt ist. Insbesondere bei konisch gefrästen Fängern, welche wesentlich kostengünstiger als zylindrisch gefräste Fänger herzustellen sind, aber auch günstigeres Durchströmungsverhalten zeigen, müssen Federn mit einem Durchmesser, welcher weit unter der Breite des Ringes liegt, gewählt werden. Während bei Ventilen, die mit breiten Ringen versehen sind, dies keine sonderliche Einschränkung darstellt, kommen bei schmäleren Ringen nur mehr Federn in frage, welche für einen zuverlässigen Betrieb zu filigran sind. Für schnelllaufende Kompressoren und/oder in unter höheren Drücken arbeitenden Kompressorstufen müssen aber Ventile mit relativ geringen Hüben verwendet werden. Damit auch bei geringen Hüben ausreichende Strömungsquerschnitte erzielt werden, müssen schmale Ringe gewählt werden. Da gerade bei diesen Anwendungen besonders hohe Anforderungen an die Robustheit der Federn gestellt werden, ergibt sich ein in der Praxis bisher nicht aufzulösender Widerspruch.

Bei einem der eingangs angesprochenen und beispielsweise aus der EP 345 245 A1 oder der AT-PS 391.928 bekannten Ventil ergibt sich der Vorteil, daß große und robuste Federn gewählt werden können, welche an den Knoten der aus in Umfangsrichtung verlaufenden und radialen Stegen bestehenden Stützplatte angesetzt werden. Es ergibt sich damit allerdings der Nachteil, daß bei Ausführungen mit mehr als zwei Ringplatten die mittleren Ringe nicht oder nur mangelhaft in radialer Richtung geführt werden können. Es wurden zwar auch Ausführungen bekannt, bei denen Profile in die den Ringen zugewandte Seite der Synchronplatte eingearbeitet wurden, wobei sich aber in der Praxis herausgestellt hat, daß unter bestimmten Umständen die dadurch gegebene Zentrierung der Ringe nicht ausreichend ist, und die Ringe durch die Wirkung der Strömungskräfte seitlich ausgelenkt werden. Dies führt zum Verschleiß oder Bruch der Ringe und damit zum Ausfall des Ventils.

Aufgabe der vorliegenden Erfindung ist es, die angesprochenen Nachteile der bekannten Ausführungen zu vermeiden und insbesonders ein Ventil der eingangs angesprochenen Art so auszubilden, daß die Führung der einzelnen Ringplatten in Hubrichtung verbessert werden kann ohne daß Kompromisse im Hinblick auf die Befederung der Ringplatten gemacht werden müssen.

Diese Aufgabe wird bei einem Ventil der eingangs genannten Art dadurch gelöst, daß die Stützplatte aus einzelnen konzentrisch angeordneten, jeweils zwei benachbarte Ringplatten übergreifenden Stützringen besteht, welche in Hubrichtung an Führungsansätzen des Fängers geführt sind, die an den Radialstegen des Fängers jeweils im Bereich von Außen- und Innenumfang der Stützringe angeordnet sind und soweit in Richtung Ventilsitz vorragen, daß auch die jeweils benachbarte Ringplatte über den gesamten Hub daran geführt ist. Es wird also die die Ringplatten übergreifende Stützplatte in einzelne konzentrische Stützringe zerlegt, welche jeweils ein Paar von Ringplatten übergreift bzw. belastet. Die Führungsansätze im Bereich der Radialstege des Fängers können für jeden einzelnen Stützring am Außen- und/oder Innenumfang zur Führung in Hubrichtung herangezogen werden, wobei üblicherweise nur eine dieser Führungsmöglichkeiten ausreichen wird. Die von einer einzelnen Stützplatte übergriffenen bzw. befederten beiden einzelnen Ringplatten sind jeweils über die benachbarten Führungsansätze nur auf einer Seite (also entweder am Außen- oder am Innenumfang) geführt - in einer einzelnen Gruppe ist die jeweils äußere, größere Ringplatte am Außenumfang und die innere, kleinere Ringplatte am Innenumfang in Hubrichtung an den Führungsansätzen des Fängers geführt.

An dieser Stelle ist zu erwähnen, daß bei einer ungeraden Anzahl von Ringplatten, beispielsweise beim innersten Ring (oder auch einem sonstigen einzelnen Ring) entweder auf den Stützring überhaupt verzichtet werden kann, oder aber abweichend von der beschriebenen Ausgestaltung an der entsprechenden Position ein nur eine einzelne Ringplatte stützender Stützring gewählt werden kann. Eine weitere entsprechende Möglichkeit besteht darin, dass die drei innersten Ringe über einen gemeinsamen Stützring befedert werden und zwecks Realisierung einer radialen Führung des mittleren dieser drei Ringe die entsprechenden Führungsansätze des Fängers durch einen Schlitz des Stützringes ragen. Für den oben als ersten genannten Fall können die Federn für die einzelne Ringplatte beispielsweise auch an den Umfangsstegen des Fängers angeordnet werden, was aufgrund des üblicherweise kleineren Durchmessers des innersten Ringes zu keiner maßgeblichen Einschränkung der maximal möglichen Befederungsstärke führt.

Durch die erwähnte erfindungsgemäße Ausgestaltung ist das unerwünschte Radialspiel der einzelnen Ringplatten zuverlässig durch über den gesamten Hub der Ringplatten mit diesen zusammenwirkende Führungsflächen an den Führungsansätzen des Fängers begrenzt. Dies ist an sich zwar auch bei den eingangs beschriebenen einzeln befederten Ringplatten möglich, bei denen für jede einzelne Platte Führungsstege am Fänger angebracht werden können, wobei dies aber die beschriebenen Nachteile im Hinblick auf die Befederung der einzelnen Platten mit sich bringt.

Eine gemeinsame, jeweils zwei im wesentlichen ringförmige Sitzplatten übergreifende Pufferplatte ist beispielsweise aus der US-PS 1.735.205 bekannt, wobei in diesem Falle aber die gemeinsame Befederung beider Sitzplatten über einzelne im Spalt zwischen diesen angreifende Federn erfolgt, die auch gleichzeitig die Führung von Sitzplatte und Pufferplatte in Hubrichtung übernehmen, was insbesonders für heutige schnelllaufende Kolbenverdichter eine Reihe von Nachteilen bringt und nicht praktikabel ist.

Ein Ventil ohne die einzelnen Ringplatten übergreifende Stützplatte, bei dem die Ringplatten jeweils paarweise an abwechselnd am Außen- und Innenumfang angreifenden Führungsflächen des Fängers geführt sind, ist ebenfalls an sich bekannt, wobei aber im Hinblick auf die fehlende Stützplatte völlig andere Voraussetzungen im Hinblick auf die Befederung der Ringplatten vorliegen.

Gemäß einer weiteren bevorzugten Ausgestaltung der Erfindung sind die Federn zur Belastung der Stützringe im Bereich der Knoten zwischen den Radial- und Umfangsstegen des Fängers angeordnet. Es können in diesem Bereich sowohl einzelne als auch jeweils mehrere Federn vorgesehen werden, deren konkrete Ausgestaltung (beispielsweise Schraubenfedern, Federbügel oder dergleichen) im Rahmen der Erfindung belanglos ist. Größe, Anzahl und Form dieser Federn wird im wesentlichen nur beschränkt durch den in diesem Bereich zur Verfügung stehenden Platz, damit nicht die Durchströmquerschnitte unnötig verengt werden müssen.

Bei den oben beschriebenen Ausführungsformen des erfindungsgemäßen Ventils kann sich unter Umständen ergeben, daß in bestimmten Fällen eine gleichmäßige Befederung, d.h. daß alle Ringplatten mit ungefähr gleicher Federkraft bezogen auf die Anströmfläche beaufschlagt werden, nicht möglich ist. Nach einer weiteren Ausgestaltung der Erfindung kann in diesem Zusammenhang vorgesehen sein, daß für die einzelnen Stützringe unterschiedliche Befederungsstärken vorgesehen sind, vorzugsweise durch Anordnung verschieden großer Federn oder durch Anordnung von unterschiedlichen Federanzahlen pro Stützring und Stegknoten.

Beim Einsatz der erfindungsgemäßen Ventile beispielsweise in Hochdruckstufen von Kompressoren kann sich unter Umständen zeigen, daß die erforderlichen hohen Federkräfte durch die relativ wenigen, an den Stegknoten unterzubringenden Federn nicht bereitgestellt werden können. Um dieses Problem zu lösen ist in weiterer Ausgestaltung der Erfindung vorgesehen, daß die beiden, einem bestimmten Stützring zugeordneten Ringplatten samt den darüberliegenden Umfangsstegen des Stützringes unterschiedliche Breite aufweisen und daß die Federn zur Belastung des Stützringes an der dem Fänger zugewandten Seite des breiteren der beiden Umfangsstege des Stützringes angreifen. Alternativ, und um aus anderen Gründen vorteilhafte gleiche Ringbreiten für alle Ringplatten beibehalten zu können, kann auch eine andere Ausgestaltung der Erfindung vorteilhaft angewandt werden, gemäß welcher die freien Durchströmschlitze in den Stützringen, bezogen auf die Ventilachse, zumindest einseitig kegelartig begrenzt geneigt verlaufen, wobei die Federn zur Belastung der Stützringe an der damit auf einer Seite der Durchströmschlitze breiteren, dem Fänger zugewandten Seite der Umfangsstege des Stützringes angreifen. Die Befederung kann in beiden Fällen über die gesamte Länge der breiteren Umfangsstege aufgeteilt werden, wobei die eingangs angesprochene Einschränkung bezüglich eines maximal wählbaren Federdurchmessers entfällt bzw. weit weniger kritisch ist. An der den Ringplatten zugewandten Seite der Stützringe kann der Durchgangsschlitz den zugeordneten Ringkonturen angepaßt werden, damit zusätzliche Verwirbelungen der Strömung vermieden werden. Entsprechend kann der Durchgangsschlitz auf der Ausrittsseite zum Fänger hin auch an die dortigen Ausströmschlitze angepaßt werden, um entsprechende Schwierigkeiten mit in die Strömung ragenden Kanten zu vermeiden.

In weiterer Ausgestaltung der Erfindung sind die Federn auf der Fängerseite in Federnestern geführt, was die Anordnung vereinfacht und auch betriebssicherer macht.

Um den Durchströmquerschnitt an der Position der Befederung zu maximieren, können die Stützringe in weiterer Ausgestaltung der Erfindung mit entsprechenden Bohrungen, welche vorzugsweise kleiner als der Feder-Innendurchmesser ausgeführt sind, versehen werden. In gleicher Weise wird auch im Federnest bzw. am Fänger eine entsprechende Bohrung vorgesehen und so ein zusätzlicher Strömungsquerschnitt zur Verfügung gestellt.

Nach einer besonders bevorzugten weiteren Ausbildung der Erfindung ist vorgesehen, daß die Stützringe am Innen- und/oder Außenumfang im Bereich zumindest einzelner der Führungsansätze des Fängers mit diesen zusammenwirkende abstehende Nasen aufweisen, womit eine in vielen Fällen unerwünschte Rotationsbewegung der Ringplatten relativ zum Ventilsitz einfach verhindert werden kann.

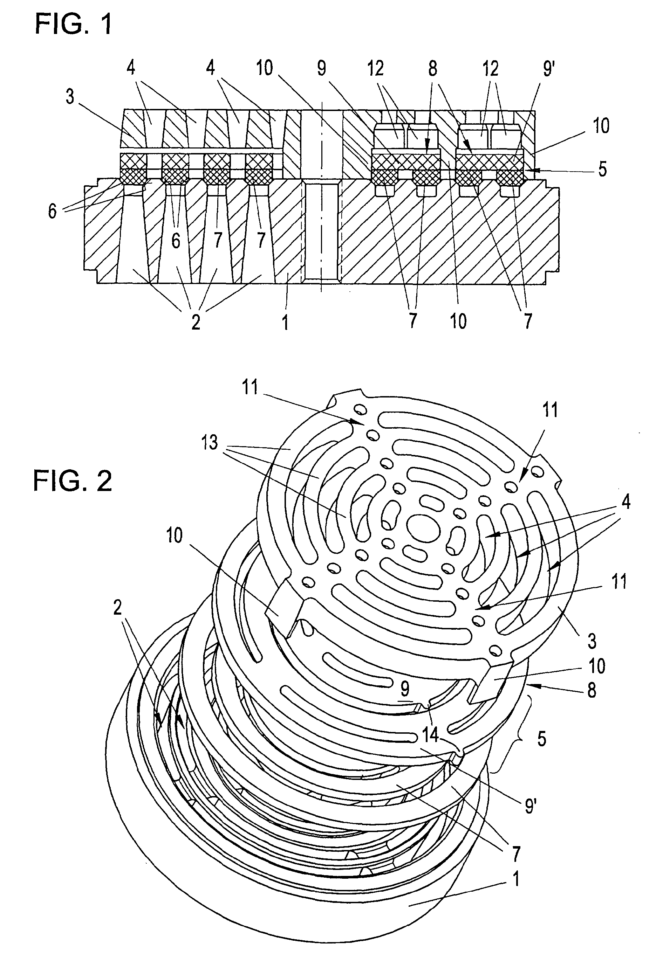

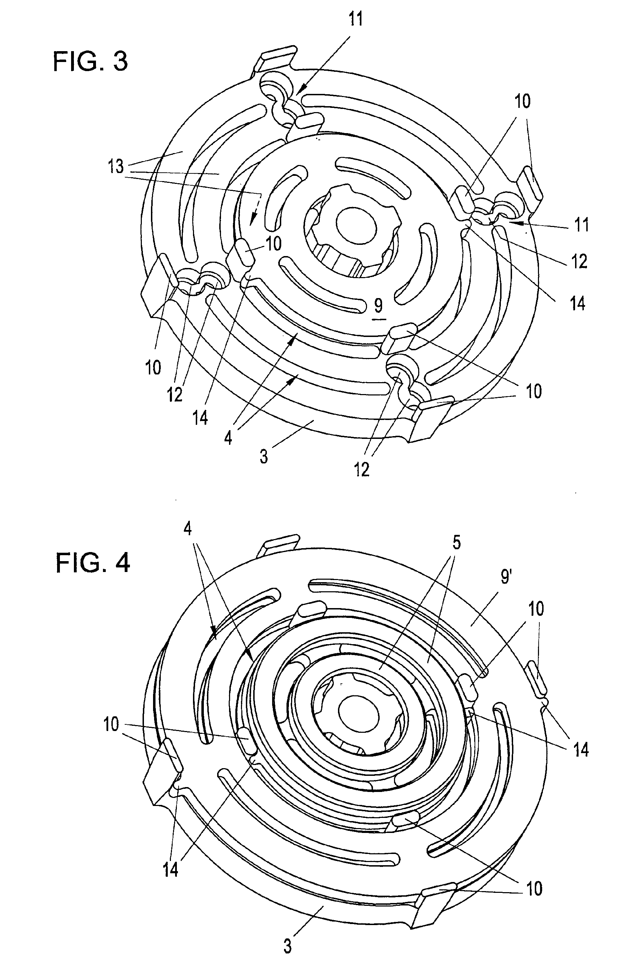

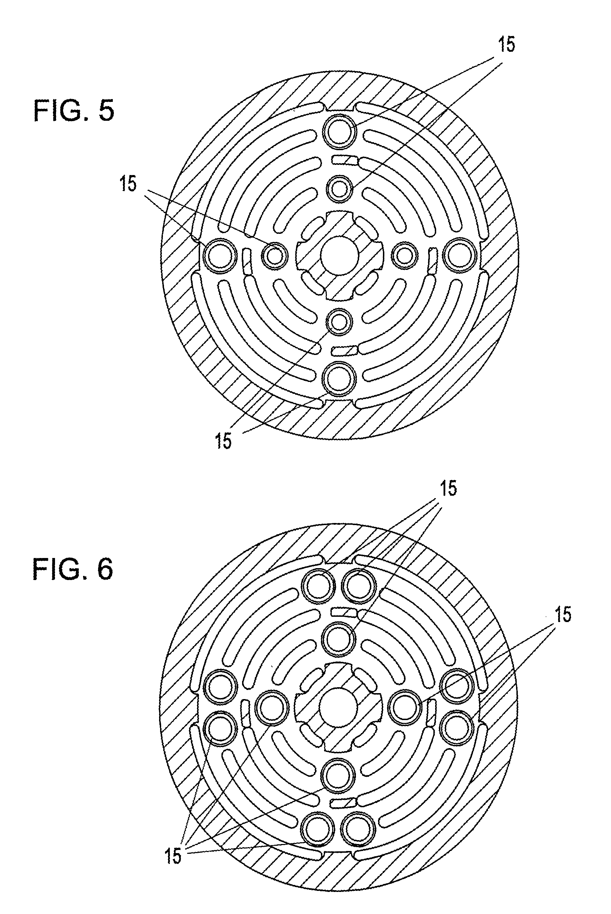

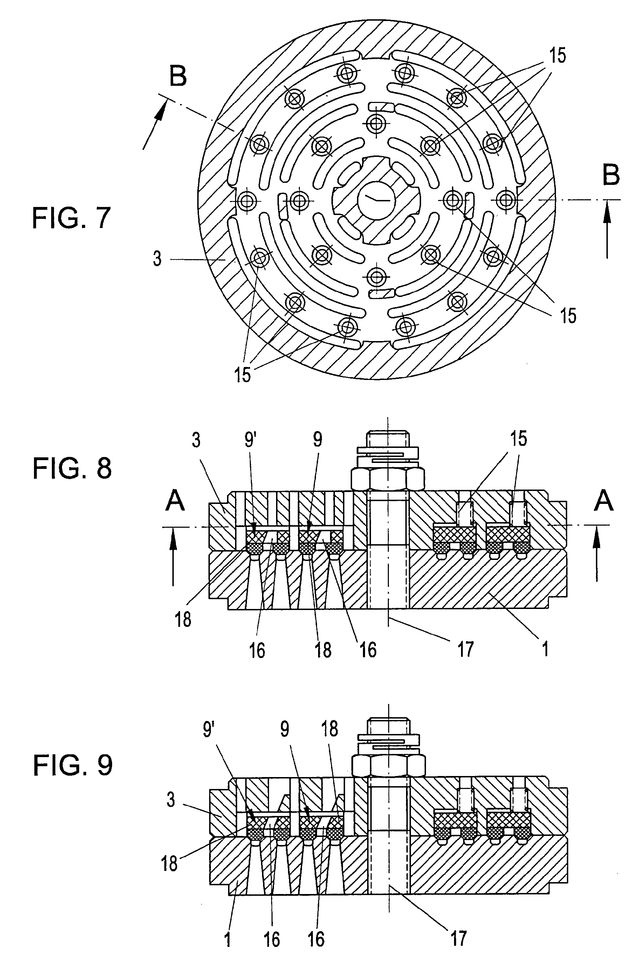

Die Erfindung wird im folgenden noch anhand des in der Zeichnung teilweise schematisch dargestellten Ausführungsbeispiels näher erläutert. Fig. 1 zeigt dabei einen teilweisen Schnitt durch ein erfindungsgemäßes Ventil, Fig. 2 eine Explosionsdarstellung des Ventils nach Fig. 1, Fig. 3 die perspektivische Ansicht des Fängers des Ventils nach den Fig. 1 und 2 von unten mit einem eingelegten einzelnen Stützring, Fig. 4 wiederum den Fänger in einer Darstellung gemäß Fig. 3 mit beiden eingelegten Stützringen und zusätzlich zwei eingelegten einzelnen Ringplatten, Fig. 5 und 6 zeigen teilweise Schnitte durch unterschiedliche Ausführungsformen weiterer erfindungsgemäßer Ventile (in Schnittführung und Schnittrichtung gemäß den in Fig. 8 eingezeichneten Linien A-A), Fig. 7 und 8 zeigen Schnitte durch ein weiteres erfindungsgemäßes Ventil (Fig. 7 entlang der Linie A-A in Fig. 8 und Fig. 8 entlang der Linie B-B in Fig. 7), Fig. 9 zeigt ein weiteres Ausführungsbeispiel der Erfindung in einem Schnitt wie Fig. 8 und Fig. 10 und 11 zeigen Stützringe zur Verwendung beispielsweise in Konstruktionen gemäß Fig. 5 und 6.

Das in den Fig. 1 bis 4 dargestellte Ventil, welches beispielsweise als Ein- oder Auslaßventil eines hier nicht weiter dargestellten Kolbenverdichters eingesetzt werden kann, besteht im wesentlichen aus einem Ventilsitz 1, der im wesentlichen ringförmig konzentrisch angeordnete Durchgangskanäle 2 für das gesteuerte Medium aufweist, einem Fänger 3, der Abströmkanäle 4 aufweist und im Abstand über dem Ventilsitz angeordnet ist, einer zwischen Fänger 3 und Ventilsitz 1 hin und her beweglich angeordneten Ventilplatte 5, mit mehreren einzelnen den Durchgangskanälen 2 des Ventilsitzes 1 zugeordneten und im wesentlichen abgeschrägte Dichtflächen 6 aufweisenden Ringplatten 7 und einer vom Fänger 3 her federbelastet auf den Ringplatten 7 aufliegenden Stützplatte 8. Die Stützplatte 8 besteht hier aus zwei konzentrisch angeordneten, jeweils zwei benachbarte Ringplatten 7 übergreifenden einzelnen Stützringen 9, 9', welche in Hubrichtung an Führungsansätzen 10 des Fängers 3 geführt sind. Diese Führungsansätze 10 sind - wie insbesonders aus den Fig. 2 bis 4 hervorgeht - an den Radialstegen 11 des Fängers 3 jeweils im Bereich von Außen- und Innenumfang der Stützringe 9, 9' angeordnet und ragen soweit in Richtung Ventilsitz 1 (gemäß Darstellung in Fig. 1 und 2 nach unten und gemäß Darstellung in Fig. 3 und 4 nach oben) vor, daß auch die jeweils benachbarte Ringplatte 7 über deren gesamten Hub daran geführt ist.

Die hier nicht dargestellten Schraubenfedern zur Belastung der Stützringe 9, 9' sind in Federnestern 12 im Bereich der Knoten zwischen den Radial- und Umfangsstegen 11, 13 des Fängers 3 angeordnet, wobei über die Stützringe 9, 9' die Federkraft auf die einzelnen Ringplatten 7 verteilt wird.

Wie insbesonders aus Fig. 3 hervorgeht, weisen die Stützringe (in Fig. 3 ist nur der innere dargestellt und mit 9 bezeichnet) am Außenumfang im Bereich von zwei der Führungsansätze 10 des Fängers 3 mit diesen zusammenwirkende abstehende Nasen 14 auf, mittels welcher eine Rotationsbewegung dieser Stützringe 9, 9' relativ zum Ventilsitz 1 verhindert ist. Durch die dargestellte umfangsmäßig versetzte Anordnung dieser Nasen 14 ist eine Verdrehung der Stützringe 9, 9' in beide Richtungen zuverlässig verhindert, ohne daß weitere derartige Nasen 14 vorzusehen wären.

Gemäß den Darstellungen in Fig. 5 und 6 sind für die einzelnen aufgrund der Schnittführung hier nicht ersichtlichen Stützringe unterschiedliche Befederungsstärken vorgesehen. Bei der Ausführung nach Fig. 5 sind dazu verschieden große Federn 15 den einzelnen Stützringen zugeordnet, wogegen bei der Ausführung nach Fig. 6 der äußere Stützring mit zwei und der innere Stützring mit nur einer Feder 15 im Bereich jedes Stegknotens belastet ist. Auf diese Weise kann beispielsweise eine gleichmäßige Befederung der Ringplatten ermöglicht werden, damit alle Ringplatten zumindest mit ungefähr gleicher Federkraft bezogen auf die Anströmfläche beaufschlagt werden.

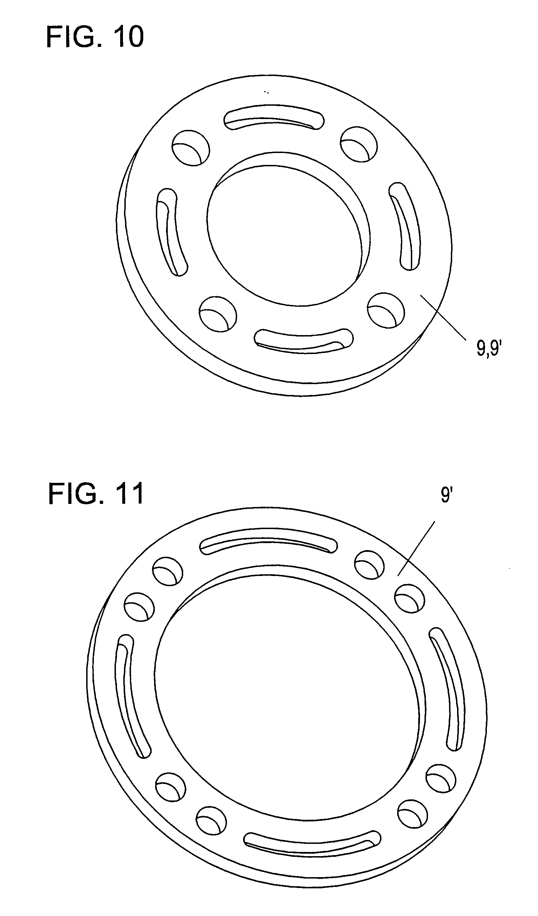

Zusätzlich besteht bei dieser Konstruktion die Möglichkeit durch Anbringen von entsprechenden Bohrungen in den Stützringen an der Position der Federn den Durchströmquerschnitt zu erhöhen. Geeignete Stützringausbildungen sind aus Fig. 10 (für Anordnung nach Fig. 5 außen und innen sowie Fig. 6 innen) und Fig. 11 (für Anordnung nach Fig. 6 außen) ersichtlich.

Bei den Ausführungen gemäß Fig. 7 bis 9 verlaufen die freien Durchströmschlitze 16 in den Stützringen 9, 9', bezogen auf die Ventilachse 17, zumindest einseitig kegelartig begrenzt geneigt, wobei die Federn 15 zur Belastung der Stützringe 9, 9' an der damit auf einer Seite der Durchströmschlitze 16 breiteren, dem Fänger 3 zugewandten Seite der Umfangsstege 18 der Stützringe 9, 9' angreifen. Es ist auf diese Weise möglich, daß in ihrem Durchmesser relativ große Federn 15 - einwirkend auf den jeweils breiteren, äußeren Umfangssteg 18 Anwendung finden - die schmäleren, inneren Umfangsstege der Stützringe 9, 9' sind nur über die Radialstege verbunden und damit mitbefedert.

Speziell aus den Fig. 8 und 9 ist ersichtlich, daß die Durchströmschlitze 16 der Stützringe 9, 9' recht leicht so ausgebildet werden können, daß das von der Seite des Ventilsitzes 1 her durchströmende Medium nicht unnötigerweise umgelenkt oder durch vorragende Kanten behindert wird. Zur Ausführung nach Fig. 9 ist noch darauf hinzuweisen, daß hier auch die Abströmkanäle im Fänger 3 entsprechend abgeschrägt sind, um die Strömung nicht unnötig zu behindern.

Abgesehen von den in Fig. 8 und 9 dargestellten Ausführungen könnten die beiden, einem bestimmten Stützring 9, 9' zugeordneten Ringplatten 7 samt den darüberliegenden Umfangsstegen des Stützringes selbst auch insgesamt unterschiedliche Breite aufweisen, wobei die Federn zur Belastung des Stützringes an der dem Fänger zugewandten Seite des breiteren der beiden Umfangsringe des Stützringes angreifen könnten. Auch auf diese Weise ist sichergestellt, daß am jeweils breiteren Umfangssteg entsprechend stärker dimensionierte Federn angreifen können und damit auch den jeweils anderen Stützring bzw. damit die entsprechende Ringplatte mitbefedern.

Bei den dargestellten Ausführungen des Ventils bestehen Ventilsitz 1 und Fänger 3 wie üblich aus metallischen Werkstoffen, vorzugsweise Stahl - die Ringplatten 7 wie auch die Stützringe 9, 9' bestehen aus entsprechend verstärkten Kunststoffen - die Werkstoffauswahl in diesem Bereich wird maßgeblich vom Einsatzzweck (Betriebstemperatur, Betriebsdruck und dergleichen) bestimmt ― bedarfsweise können auch beliebige andere geeignete Werkstoffe zum Einsatz kommen.

## Patentansprüche

1. Ventil, insbesonders für Kolbenverdichter, mit einem Ventilsitz (1), der im wesentlichen ringförmig konzentrisch angeordnete Durchgangskanäle (2) für das gesteuerte Medium aufweist, einem Fänger (3), der Abströmkanäle (4) aufweist und im Abstand über dem Ventilsitz (1) angeordnet ist und mit einer zwischen Fänger (3) und Ventilsitz (1) hin und her beweglich angeordneten Ventilplatte (5), mit mehreren einzelnen den Durchgangskanälen (2) des Ventilsitzes (1) zugeordneten und im wesentlichen abgeschrägte Dichtflächen (6) aufweisenden Ringplatten (7) und einer vom Fänger (3) her federbelastet auf den Ringplatten (7) aufliegenden Stützplatte (8), **dadurch gekennzeichnet, daß** die Stützplatte (8) aus einzelnen konzentrisch angeordneten, jeweils zwei benachbarte Ringplatten (7) übergreifenden Stützringen (9, 9') besteht, welche in Hubrichtung an Führungsansätzen (10) des Fängers (3) geführt sind, die an den Radialstegen (11) des Fängers (3) jeweils im Bereich von Außen- und Innenumfang der Stützringe (9, 9') angeordnet sind und soweit in Richtung Ventilsitz (1) vorragen, daß auch die jeweils benachbarte Ringplatte (7) über den gesamten Hub daran geführt ist.

2. Ventil nach Anspruch 1, **dadurch gekennzeichnet daß** die Federn (15) zur Belastung der Stützringe (9,9') im Bereich der Knoten zwischen den Radial- und Umfangsstegen (11,13) des Fängers (3) angeordnet sind.

3. Ventil nach Anspruch 2, **dadurch gekennzeichnet, daß** für die einzelnen Stützringe (9, 9') unterschiedliche Befederungsstärken vorgesehen sind, vorzugsweise durch Anordnung verschieden großer Federn (15) oder durch Anordnung von unterschiedlichen Federanzahlen pro Stützring (9, 9') und Stegknoten.

4. Ventil nach Anspruch 1, **dadurch gekennzeichnet, daß** die beiden, einem bestimmten Stützring (9, 9') zugeordneten Ringplatten (7) samt den darüber liegenden Umfangsstegen (18) des Stützringes (9, 9') unterschiedliche Breite aufweisen und daß die Federn (15) zur Belastung des Stützringes (9, 9') an der dem Fänger (3) zugewandten Seite des breiteren der beiden Umfangsstege (18) des Stützringes (9, 9') angreifen.

5. Ventil nach Anspruch 1, **dadurch gekennzeichnet, daß** die freien Durchströmschlitze (16) in den Stützringen (9, 9'), bezogen auf die Ventilachse (17), zumindest einseitig kegelartig begrenzt geneigt verlaufen, und daß die Federn (15) zur Belastung der Stützringe (9, 9') an der damit auf einer Seite der Durchströmschlitze (16) breiteren, dem Fänger (3) zugewandten Seite der Umfangsstege (18) des Stützringes (9, 9') angreifen.

6. Ventil nach einem oder mehreren der Ansprüche 2 bis 5, **dadurch gekennzeichnet, daß** die Federn auf der Fängerseite in Federnestern (12) geführt sind.

7. Ventil nach einem oder mehreren der Ansprüche 1 bis 6, **dadurch gekennzeichnet, dass** die Stützringe (9, 9') und der Fänger (3) im Angriffsbereich der als Schraubenfeder ausgeführten Federn (15) mit Durchströmbohrungen versehen sind, deren Durchmesser vorzugsweise kleiner als der Innendurchmesser der jeweiligen Feder (15) ist.

8. Ventil nach einem oder mehreren der Ansprüche 1 bis 7, **dadurch gekennzeichnet, daß** die Stützringe (9,9') am Innen- und/oder Außenumfang im Bereich zumindest einzelner der Führungsansätze (10) des Fängers (3) mit diesem zusammenwirkende abstehende Nasen (14) aufweisen.
